# EUROPEAN PATENT APPLICATION

(11) **EP 1 775 310 A1**
(43) Date of publication of application: **18.04.2007**
(21) Application number: 05748599.7
(22) Date of filing: 07.06.2005
(51) Int. Cl.: C08F 6/08, C08F 10/10, C08F 297/00

(54) **METHOD FOR PRODUCING ISOBUTYLENE POLYMER**

(30) Priority: 15.06.2004 JP 2004176659
(71) Applicant: Kaneka Corporation, Kita-ku Osaka-shi, Osaka 530-8288 (JP)
(72) Inventor: TERAZAWA, H., KANEKA CORPORATION, Takasago-shi, Hyogo 676-8688 (JP)
(74) Representative: Weinberger, Rudolf
(86) International application number: PCT/JP2005/010383
(87) International publication number: WO 2005/123785

(57) **Abstract**

Disclosed is a method for stably and efficiently removing a catalyst from an isobutylene polymer by improving the separatability of an organic phase and an aqueous phase during the operation wherein a catalyst is washed out from a reaction solution containing an isobutylene polymer by means of water. Specifically disclosed is a method for producing an isobutylene polymer which is **characterized in that** the water containing 0.00005 - 0.005 weight % of a nonionic polymer surfactant having a hydroxyl group is used when a reaction solution after polymerization which contains an isobutylene polymer is cleaned with water after deactivating the catalyst by treating the reaction solution with water and removing the aqueous phase.

## Description

### Background of the Invention

### Technical Field

The present invention relates to an efficient removal of catalyst residue of an isobutylene polymer, namely a method for producing an isobutylene polymer by its efficient purification.

### Background Art

Isobutylene polymer is a liquefied rubber which is excellent in visco-elasticity,weather resistance, gas barrier properties, etc. If a specific functional group is introduced into an isobutylene polymer to carry out a crosslinking reaction, it will become a hardened rubbery substance, which can be used as a coating material, a sealing material for construction, a sealing agent for electronic materials and the like.

Moreover, a thermoplastic elastomer is obtained by block copolymerization of isobutylene and an aromatic vinyl monomer, and the elastomer is rubbery at room temperature but flows when heated, and can be easily molded. The elastomer is given a variety of high functionalities such as heat resistance, weather resistance, vibration control properties, gas barrier properties or the like. Making use of said properties, it can be used in the fields of sealants, fireproof foamed sheets, vibration prevention materials, rubber modifier and the like.

These isobutylene polymers tend to show decreased viscosity as their molecular weight distributions are narrowed, and as a result, the reaction solutions can be easily admixed and the handling of products is improved. To express desired properties by block copolymerization of isobutylene and aromatic vinyl monomer, it is preferable to control the reaction so that all the polymers are copolymerized. It is a technique of living polymerization that is useful for effectively obtaining an isobutylene polymer satisfying these requirements.

Living polymerization is a polymerization in which a molecular chain grows while the polymerization is not disturbed by side reactions such as stop reaction, chain transfer reaction and so on. In such living polymerization, it is possible to obtain a polymer having a uniform molecular weight when polymerization reactions are simultaneously initiated and to introduce a specific functional group into the distal end of the polymer or to synthesize a copolymer by adding a different sort of monomer at the end point of the polymerization reaction. Isobutylene is a typical-cationic-polymerizing monomer, and the production of poly-isobutylene using the living cationic polymerization technique (refer to the patent reference documents 1 and 2) has been conducted on an industrial scale. In the living cationic polymerization, a polymerization initiator, a polymerization catalyst and further an electron donor for the purpose of stabilizing the reaction are used, in addition to cationic-polymerizing monomers.

The production of an isobutylene-aromatic vinyl-block copolymer using the living cationic polymerization reaction technique is performed by adding an aromatic vinyl monomer to the reaction liquid in which the polymerization reaction of isobutylene is substantially completed (refer to the patent reference document 3).

A Lewis acid catalyst used in the cationic polymerization and the deactivated catalyst residue can cause a number of unwanted effects such as corrosion, odor, coloring, reaction disturbance of the functional groups and so on when remaining in the polymer, and thus, they must be thoroughly removed by proper means.

The operation of pouring the reaction solution containing an isobutylene polymer into an aqueous solution at room temperature or at higher temperature, and deactivating a catalyst and to remove the aqueous phase is a publicly known technology (patent reference documents 4 and 5). After said operation, washing out with water must be repeatedly carried out several times to completely remove the catalyst residue, but a phenomenon of incomplete separation between the organic and aqueous phase tends to occur through repeated washes. The incomplete phase separation can cause a condition where the water phase is caught in the organic phase, which is as bad as a condition of non-removal of the catalyst residue.

To perform a stable production by achieving a complete separation of the organic and aqueous phase counter-measures such as extension of decantation time, improvement of the phase separation through dilution with a solvent, or the employment of centrifugal separation equipment and the like are necessary, but these are disadvantageous from an industrial viewpoint.
[Patent reference document 1] Patent Application Publication No. H7-292038[
Patent reference document 2] Patent Application Publication No. H8-53514
[Patent reference document 3] Patent Application Publication No. H11-100420
[Patent reference document 4] Patent Application Publication No. H7-196724
[Patent reference document 5] Patent Publication No. H8-269118

### Disclosure of the Invention

### Problems to be Solved by the Invention

The present invention provides a method for efficiently producing an isobutylene polymer by efficiently removing catalyst residue used in cationic polymerization.

### Means for Solving the Problems

The inventor of the present invention has wholeheartedly examined how to perform a stable, efficient operation which can wash out a catalyst residue by means of water from the reaction solution containing the deactivated isobutylene polymer and which carries out the separation and the removal of the water. As a solution, it was found that a method of washing out by means of water containing a nonionic high molecular weight surfactant is effective in separating the organic phase containing the isobutylene polymer and the washing water.

Therefore, the present invention relates to a method for producing an isobutylene polymer, characterized in that after a reaction solution containing an isobutylene polymer subsequent to polymerization process is treated with water to deactivate a catalyst and an aqueous phase is removed, water containing an amount of 0.00005 to 0.005 % by weight of a nonionic high molecular weight surfactant having a hydroxyl group is used to wash out said solution.

A preferable embodiment of the present invention relates to a method for producing an isobutylene polymer, characterized in that the nonionic high molecular weight surfactant having a hydroxyl group has 0.3 to 4 hydroxyl groups on average per repeating unit of molecular frame.

A preferable embodiment of the present invention relates to a method for producing an isobutylene polymer, characterized in that the nonionic high molecular weight surfactant having a hydroxyl group is a cellulose derivative.

A preferable embodiment of the present invention relates to a method for producing an isobutylene polymer, characterized in that the nonionic high molecular weight surfactant having a hydroxyl group is a polyvinyl alcohol or its derivative.

A preferable embodiment of the present invention relates to a method for producing an isobutylene polymer, characterized in that the isobutylene polymer is a polymer which is mainly composed of isobutylene.

A preferable embodiment of the present invention relates to a method for producing an isobutylene polymer, characterized in that the isobutylene polymer is a block copolymer comprising
(A) a polymer block mainly composed of isobutylene and
(B) a polymer block mainly composed of an aromatic vinyl monomer.

A preferable embodiment of the present invention relates to a method for producing an isobutylene polymer, characterized in that the isobutylene polymer is a polymer which is obtainable by polymerization at a temperature range from -90 to -30 degrees C.

A preferable embodiment of the present invention relates to a method for producing an isobutylene polymer, characterized in that the isobutylene polymer is produced by using at least one kind of compounds to be selected from (1-chloro-1=methylethyl) benzene, 1,4-bis (1-chloro-1-methylethyl) benzene, and 1, 3, 5-tris (1-chloro-1-methylethyl) benzene as a polymerization initiator.

A preferable embodiment of the present invention relates to a method for producing an isobutylene polymer, characterized in that the isobutylene polymer is produced by using a titanium tetrachloride as a catalyst.

A preferable embodiment of the present invention relates to a method for producing an isobutylene polymer, characterized in that the isobutylene polymer is produced by using 2-methylpyridine and/or dimethyl-acetamide as an electron donor.

A preferable embodiment of the present invention relates to a method for producing an isobutylene polymer, characterized in that a solvent of the solution containing the isobutylene polymer is a mixed solvent including a primary and/or secondary mono-halogenated hydrocarbon having 3 to 8 carbons and an aliphatic and/or aromatic hydrocarbon.

### The Effect of the Invention

It is possible to improve the separatability between the organic and aqueous phase, compared to conventional ways and to shorten the time required for the separation by employing the method of the present invention in which water containing a nonionic high molecular weight surfactant is used for washing out. It enables to more efficiently remove a catalyst residue than before and to prevent the catalyst residue from admixing into the organic phase due to insufficient separation of the phases so that a stable quality of isobutylene polymer may be obtained.

The Best Mode for Carrying out the Invention The present invention is explained in detail below. The details of the living cationic polymerization for which the present invention may be applied are summarized with regard to the synthetic reaction in the works, for example, by J. P. Kennedy et al. (Carbocationic Polymerization, John Wiley & Sons, 1982) and K. Matyjaszewski et al. (Cationic Polymerizations, Marcel Dekker, 1996).

### (Polymerization initiator)

To efficiently conduct an initiation reaction of cationic polymerization, the inifer method using as a polymerization initiator such compounds having a chlorine atom linked to a tertiary carbon or chlorine compounds having an aromatic ring in α-position has been developed (refer to the U.S. Patent No. 4276394), and the method can be applied for the present invention. Any initiators that exert their function may be used in the inifer method, and those having the following structure can be mentioned as a typical initiator.

(X-CR¹R²)nR³

(where X represents a halogen atom, and R¹ and R² represent the same or different monovalent hydrocarbon groups with 1-20 carbon atoms. R3 represents n-valent hydrocarbon groups with 1 -20 carbon atoms and n is an integer of 1 to 4.)

The kind of initiators which can be used for the synthesis of isobutylene polymers has been disclosed in the Japanese Patent Application Publication No. H7-292038 , and in terms of stability of terminal cation are preferred; (1-chloro-1-methylethyl) benzene (called also as MCC or cumyl chloride), 1, 4-bis (1-chloro-1-methylethyl) benzene (called also p-DCC or dicumyl chloride), 1, 3, 5-tris (1-chloro-1-methylethyl) benzene (called also TCC or tricumyl chloride). Moreover, compounds containing aromatic rings,as well as their derivatives, may also be used. These initiators can be used alone or in a mixture. They have a single or several initiation points for the polymerization and should be preferably selected depending on the polymer targeted, since the number of initiation points for the polymerization will have an effect on the primary structure of the polymers obtained. For example, bi-functional initiators such as p-DCC should be selected in the case that a straight polymer is required. Depending on the necessity, mono-functional initiators such as MCC and tri-functional ones such as TCC may be used.

### (Polymerization catalyst)

Catalysts to be used in the cationic polymerization of isobutylene polymers are generally classified as a Lewis acid and any kind of them can be used as long as they have potency for the cationic polymerization. Examples include TiCl₄, AlCl₄, BCl₃, ZnCl₂, SnCl₄, ethyl aluminum chloride, SnBr₄, and etc. These catalysts may be used either alone (single type only) or in combination of several types. Most preferable among them is especially TiCl₄ in terms of easier handling, high degree of polymerization activeness, economical merit, and etc. This catalyst is removed, by the method disclosed in the present invention, from the solution containing the isobutylene polymer after completed polymerization.

### (Electron donor)

It has been reported that an electron donor is used as an additional measure for obtaining a good polymer by suppressing side reactions such as chain transfer reaction, proton initiation reaction or the like when conducting the cationic polymerization to form an isobutylene polymer (Japanese Patent Application Publications No.H2-245004, No.H1-318014, and No.H3-174403).An electron donor is also used in the present invention. Examples of electron donors to be used include pyridines, amines, amides, sulfoxides, esters, or metallic compounds having oxygen atoms linked to metal atoms and the like. More specifically, it is preferable to use pyridine, 2-methyl-pyridine (abbreviated as picoline or α-picoline), trimethyl-amine, dimethyl-acetamide, dimethyl-sulfoxide, ethyl-acetate, titanium tetra-isopropoxide and the like. In terms of easier handling and economic merits, 2-methyl-pyridine or dimethyl-acetamide are mostly preferable. They may be used alone or in a combination of two or more.

### (Reaction temperature for polymerization)

Cationic polymerization to form isobutylene polymer is a living cationic polymerization and it is thus normally carried out at low temperatures, preferably at a range of -90 to -30 degrees C. and more preferably at a range of -80 to -50 degrees C. The reaction slowly proceeds at higher temperatures and side reactions such as chain transfer reaction or the like often happen, and it is thus preferred to keep the temperature at -30 degrees C or lower. On the other hand, matters relating to the reaction (raw material or polymer) could be eventually deposited at temperatures lower than -90 degrees C.

### (Isobutylene polymer)

Isobutylene polymers which the present invention covers are not particularly limited so long as they contain isobutylene but it is preferred that they are preferably polymers mainly composed of isobutylene . More specifically, they are polymers which are obtainable by cationic polymerization of an isobutylene monomer with an initiator and an electron donor, if necessary, in the presence of a polymerization catalyst. Polymers having a range of number average molecular weights from 1000 to 200,000 are preferred.

It is also preferred that an isobutylene polymer covered by the present invention is a block copolymer comprising
(A) a polymer block mainly composed of isobutylene and
(B) a polymer block mainly composed of an aromatic vinyl monomer.

Said block copolymer is obtainable by cationic polymerization of an isobutylene monomer with an initiator and an electron donor, if necessary, in the presence of a polymerization catalyst, followed by further cationic polymerization after adding an aromatic vinyl monomer to the reaction solution. It is preferred that said composition of (A) occupies an amount of 50 to 95 % by weight in the copolymer.

### (Aromatic vinyl monomer)

Examples of an aromatic vinyl monomer which is used to mainly compose a polymer block are styrene, α-methylstyren, p-methylstyren, dimethyl-styrehe, monochloro-styrene, dichloro-styrene, and etc. Styrene is cheap and available commerce-stably, and it is thus preferable to be used on an industrial scale. These aromatic vinyl monomers can be used alone (single kind only) or in combination of more than two kinds of them.

### (Reaction solvent for polymerization)

Solvents to be used in a cationic polymerization are not particularly limited, but any solvents composed of halogenated hydrocarbons, non-halogen solvents, or a mixture of said compounds may be used. Preferred are mixed solvents including primary and/or secondary mono-halogenated hydrocarbons with 3 to 8 carbon atoms and aliphatic and/or aromatic hydrocarbons.

As halogenated hydrocarbons are available chloroform, methylene chloride,1,1-dichloro-ethane,1,2-dichloro-ethane, n-propyl-chloride, n-butyl-chloride, 1-chloro-propane, 1-chloro-2-methylpropane, 1-chlorobutane, 1-chloro-2-methylbutane, 1-chloro-3-methylbutane, 1-chloro-2, 2-dimethylbutane, 1-chloro-pentane, 1-chloro-2-methyl-pentane, 1-chloro-3-methyl-pentane, 1-chloro-4-methyl-pentane, 1-chloro-hexane, 1-chloro-2-methyl-hexane, 1-chloro-3-methyl-hexane, 1-chloro-4-methyl-hexane, 1-chloro-5-methyl-hexane, 1-chloro-heptane,1-chloro-octane, chloro-benzene and the like. Solvents to be selected from said group may be a single solvent or a mixture of two or more solvents.

As aliphatic hydrocarbons are preferred butane, pentane, neo-pentane, hexane, heptane, octane, cyclohexane, methylcyclohexane, and ethylcyclohexane and solvents to be selected from said group may be a single solvent or a mixture of two or more.

Moreover, examples of preferable aromatic hydrocarbons are benzene, toluene, xylene and ethylbenzene, and solvents to be selected from said group may be a single solvent or a mixture of two or more.

Mixed solvents including halogenated and aliphatic hydrocarbons as well as the ones of aromatic and aliphatic hydrocarbons are preferably used from viewpoint of reaction control and solubility.

When admixing n-butyl-chloride and an aliphatic hydrocarbon to prepare a solvent, the content of n-butyl-chloride in the mixed solvent is not particularly limited, but is preferably in a range of 10 to 100 % by weight, more preferably in a range of 50 to 100 % by weight.

### (Polymerization reactor)

The design of the reactor to be used in the cationic polymerization is not particularly limited, and a stirred tank reactor is preferable. Its structure is not particularly limited, but it is preferable that the structure enables the reaction solution to be uniformly admixed.

A mixing blade employed in the stirred tank reactor is not particularly limited, but a blade exhibiting a high performance for circulation in a vertical direction and mixing as well is preferred. In a field of higher viscosities, large size blades having a big bottom paddle such as Maxblend impeller, Full zone impeller, Sunmeler impeller, Hi-Fi mixing blade, the ones mentioned in the Japanese Patent Application Publication No. H10-24230 and the like are preferably used.

Reaction solution defined by the present invention means a solution which contains isobutylene polymer synthesized on the basis of materials, conditions and equipment as described in the present application and of which polymerization reaction has been substantially completed. In the present invention, said reaction solution is treated with water to deactivate the catalyst and the aqueous phase is removed. To then wash out the solution, water containing 0.00005 to 0. 005% by weight of nonionic high molecular weight surfactant having a hydroxyl group is used.

### (Flushing operation)

It is an essential feature of the present invention that after the reaction solution containing an isobutylene polymer is treated with water to deactivate the catalyst and the aqueous phase has been removed, the separatability between the organic and aqueous phase is improved and the catalyst residue is removed from the isobutylene polymer stably and efficiently by the use of water containing a nonionic high molecular weight surfactant having a hydroxyl group by washing out said solution. A big quantity of catalyst residues will cause not a few unwanted effects, such as corrosion, odor, discoloration, and reaction disturbance of functional groups, and removing them by appropriate means is thus quite crucial.

The reaction solution containing isobutylene polymer is first contacted with water of equal or half amount of it to deactivate the catalyst, and the aqueous phase is removed from it . The separatability between the organic and aqueous phases is good at the time of this separating operation since much catalyst residue remains and the solution is in a strong acid condition, and the aqueous phase can thus be easily removed. To thoroughly remove the catalyst residue, further washing out with water is conducted and only the aqueous phase must be removed by separating it from the organic phase. When using conventional methods, however, a phenomenon is likely to happen that the separatability between the organic and aqueous phase decreases as the purification proceeds by repeated washes with water. The incomplete phase separation can cause a condition where the water phase is taken in by the organic phase, which is as bad as a condition where the catalyst residue could not fully be removed. To perform a stable production by achieving a complete separation of the organic and aqueous phase, counter-measures such as the extension of decantation time, the improvement of the phase separation through dilution with a solvent, or the employment of a centrifugal separation equipment and etc. are necessary.

By the method of the present invention, that is, when a reaction solution containing the isobutylene polymer after the polymerization process is treated with water to deactivate the catalyst and the aqueous phase has been removed, it is possible to improve the separatability between the organic and aqueous phase and to shorten the time required for the separation by the use of water that contains an amount of 0.00005 to 0.005 % by weight of a nonionic high molecular weight surfactant. It enables to more efficiently remove a catalyst residue than before and to prevent the catalyst residue from admixing into the organic phase due to incomplete separation of the phases so that a stable quality of isobutylene polymer may be obtained.

It would be a common conception that the separatability between the aqueous and organic phase will get worse due to an emulsification action of a nonionic high molecular weight surfactant having a hydroxyl group when it is used for washing out the reaction solution with water. Surprisingly, it has been, however, found that the separatability between the aqueous and organic phase becomes much better if the amount of the nonionic high molecular weight surfactant having a hydroxyl group to be used is properly controlled. It is appropriate in the present invention to wash out the reaction solution using water containing an amount of 0.00005 to 0.005 % by weight of the non-ionic high molecular weight surfactant having a hydroxyl group, and the amount of the surfactant can be determined, taking nature and throughput of the reaction solution and etc. into consideration. In its lower concentrations than said ones, time required for the separation cannot be remarkably shortened, and on the contrary, its much higher concentrations are not desirable either, because not only the separatability will get worse due to its emulsification action, but also the load for the waste water treatment will be increased. When the reaction solution washed with water containing a nonionic high molecular weight surfactant having a hydroxyl group is further washed with water, a certain amount of nonionic high molecular weight surfactant containing hydroxyl groups still remains and thus, the good separatabi lity between the aqueous and organic phase will be thus continued. For that reason, it is general that the nonionic high molecular weight surfactant having a hydroxyl group is not always added when washing is repeatedly conducted.

As nonionic high molecular weight surfactants having a hydroxyl group in the present invention, substances having 0.3 to 4 hydroxyl groups in average per repeating unit of a molecular frame are preferred. More preferred are cellulose derivatives, polyvinyl alcohol, its derivatives and the like in terms of a low environmental load, low toxicity toward humans and economical merits. Examples of cellulose derivatives include methyl cellulose, hydroxyethylmethyl cellulose, ethyl-hydroxyethylmethyl cellulose, hydroxy-propylethylmethyl cellulose and the like. Examples of polyvinyl alcohols include substances which are produced from polyvinyl alcohol and have an acetoacethyl group introduced. Nonionic high molecular weight surfactants having a hydroxyl group to be selected from said groups may be used alone or in combination of two or more kinds. In the present invention, a glucose unit is referred to as a repeating unit with regard to cellulose derivatives.

In the present invention, there is no particular limitation about how to use a nonionic high molecular weight surfactant having a hydroxyl group, and it is possible to feed an aqueous solution of a nonionic high molecular weight surfactant having a hydroxyl group prepared in advance in a washing equipment, or to separately add a nonionic high molecular weight surfactant having a hydroxyl group and water into a washing equipment and then to admix them therein.

In the present invention it is possible to conduct washing out with water once or several times repeatedly after the reaction solution has been treated with water, the catalyst has been deactivated and the aqueous phase has been removed, and the number of washing out can be selected depending on the purification degree required, polymerization conditions and etc. Moreover, it is normally enough if the nonionic high molecular weight surfactant having a hydroxyl group is used only for the 1st washing, but when washing several times repeatedly, it may be also allowed to use the non-ionic high molecular weight surfactant having a hydroxyl group in the 2^{nd} and subsequent washing processes.

The separation method between the organic and aqueous phase: can be realized in a variety of embodiments. It may be conducted either in a batch system or in a continuous system. On a big scale production, a counter-current system is preferred. It is possible to carry out washing and separation using a system composed of a number of independent equipment linked together or in a vessel which is to be considered substantially standalone. It is preferable to conduct the separation on the basis of decantation technique making use of the difference in specific gravity between both phases so that the separation installation can be simplified.

It is important to heat water and the equipment in advance to control the temperature when washing out the solution containing the isobutylene polymer. It is preferable to bring the temperature of the water up to a point which is a little lower than the boiling point of the reaction solvent, since the washing efficiency decreases when the temperature is too low. The pressure is not particularly limited, but it is desirable that the process is carried out in a pressure range of from atmospheric pressure to fine pressure in the presence of an inert gas because organic solvents are dealt with. Moreover, it is also desirable to use ion-exchanged water or distilled water as flushing water.

Transfer of the catalyst residue from the organic phase to water rapidly proceeds if the solution is mixed with water, but it will nevertheless take a certain period of time. The operation time can be determined by examining the time required for reaching the extraction equilibrium at a specific temperature. It depends on the mixture strength between the organic and aqueous phase, and a period of 5 to 30 minutes would be suitable in a general operation using a mixing tank.

Progress of purification by washing out with water may be monitored by measuring the electric conductivity and the pH of the waste water. Taking an example, the purpose of purification will be achieved if washing is conducted until the pH normally becomes 3 or more and the electric conductivity reaches 100 uS/cm.

### (Flushing equipment)

The configuration of equipment for carrying out the method of the present invention is not particularly limited, but it is necessary for removing the catalyst residue to have the organic and aqueous phase admixed as uniformly as possible. In addition to achieve a dispersion that is usually conducted, operations to improve dispersion efficiency such as the vibration of the vessel, the use of ultrasonic wave or the like may be employed, depending on the necessity.

The structure of the mixing tank is not particularly limited, but it is preferred that its jacket portion can be heated. It is also preferred that the mixing state in the tank can be improved by mounting a baffle in it. Mixing blades are not particularly limited, but those exhibiting a high performance for circulation in a vertical direction and mixing as well are preferred. As liquids having a comparatively lower range of viscosities are usually treated, mixing blades such as a multi-stage pitched paddle impeller and a turbine blade as well as a three-way sweepback blade are preferably used.

It is also preferred to have a production installation that enables a single equipment to perform both the deactivation and washing out operations.

### (Working Examples)

The following working examples will be given to describe the present invention.

### (Working Example 1)

N-butyl chloride (680 g), hexane (56 g), isobutylene monomer (170 g), p-DCC (0.99 g) and α-picoline (0.58 g) were put into a separable flask and cooled down to -73 ºC in a dry ice-Ekinen bath, followed by the addition of TiCl₄ (4.3 g) to initiate the polymerization. After the polymerization of the isobutylene monomer was substantially finished, the styrene monomer (71 g) was added
therein to conduct a copolymerization. Upon substantial completion of the styrene monomer polymerization, the reaction solution was fed into a deactivation vessel, in which water at 60 ºC was prepared in advance, to undergo deactivation. The deactivation vessel was a stirred tank (pitched-paddle impeller, d/D = 0.5, with 4 baffles and a jacket), and 360 g of water was used. The temperature inside the vessel was increased up to 60 ºC by heating the jacket. Af ter mixing for 60 minutes, the mixture was left standing for 15 minutes to remove only the aqueous phase, and water (240 g) at 60 ºC containing 0.0014 g of methylcellulose (viscosity of 2 wt %-aqueous solution at 20 ºC: 400 cP, methoxyl group: 29. 4 %) was added thereto to conduct washing for 10 minutes. After leaving it for 20 seconds , the interface between the organic and aqueous phase, emerged. In addition, rewashing was conducted with water (240 g) at 60 ºC. Subsequent to a further 20-second-standing, the interface between the organic and aqueous phase appeared. As for the aqueous phase, its pH and electric conductivity were 4.1 and 36 uS/cm, respectively.

### (Working Example 2)

Through the same operation as Working Example 1, the deactivation and the removal of the aqueous phase were conducted, and water (240 g) at 60 ºC containing 0.0007 g of methyl cellulose (viscosity of 2 wt %-aqueous solution at 20 QC: 400 cP, methoxyl group: 29. 4 %) was added thereto to conduct washing for 10 minutes. After leaving it for 35 seconds, the interface between the organic and aqueous phase emerged. In addition, rewashing was conducted with water (240 g) at 60 ºC. Subsequent to a further 20-second-standing, the interface between the organic and aqueous phase, appeared. As for the aqueous phase, its pH and electric conductivity were 4.1 and 34 µS/cm, respectively.

### (Comparative Example 1)

Through the same operation as Working Example 1, the deactivation and the removal of the aqueous phase were conducted, and water (240 g) at 60 ºC was added thereto to conduct washing for 10 minutes. As a result of observation subsequent to a 1-minute-standing, both the organic and aqueous phase seemed to be not continuous but emulsified by taking in constituents of them. After an additional 120 minute-standing, the organic phase became continuous and its interface with the aqueous phase appeared. Moreover, rewashing was conducted with water (240 g) at 60 ºC. Subsequent to standing for 60 minutes; the interface between the organic and aqueous phase emerged. As for the aqueous phase, its pH and electric conductivity were 3.9 and 38 µS/cm, respectively.

### (Working Example 3)

N-butyl chloride (2,386 g), hexane (197 g), isobutylene monomer (511 g), p-DCC (1.83 g) and α-picoline (1.63 g) were put into a separable flask and cooled down to -68 ºC in a dry ice-Ekinen bath, followed by the addition of TiCl₄ (19.6 g) to initiate polymerization. After the polymerization of the isobutylene monomer was substantially finished, the styrene monomer (247 g) was added thereto to conduct a copolymerization. Upon substantial completion of the styrene monomer polymerization, the reaction solution was fed into a deactivation vessel, in which water at 60 ºC was prepared in advance, to undergo deactivation. The deactivation vessel was a stirred tank (pitched-paddle impeller, d/D =0.5, with 4 baffles and a jacket), and 2,070 g of water was used. The temperature inside the vessel was increase up to 60 ºC by heating the jacket. After mixing for 60 minutes, the mixture was left standing for 15 minutes to remove only the aqueous phase, and water (1, 380 g) at 60 ºC containing 0.0057 g of methyl cellulose (viscosity of 2 wt %-aqueous solution at 20 ºC: 400 cP, methoxyl group: 29.4 %) was added thereto to conduct washing for 10 minutes : After standing for 20 seconds, the interface between the organic and aqueous phase emerged. In addition, rewashing was conducted with water (1,380 g) at 60 ºC. Subsequent to a 20-second-standing, the interface between the organic and aqueous phase appeared. As for the aqueous phase, its pH and electric conductivity were 3.9 and 58 µS/cm, respectively.

### (Working Example 4)

Through the same operation as Working Example 3, the deactivation and the removal of the aqueous phase were conducted, and water (1,380 g) at 60 ºC containing 0.0048 g of polyvinyl alcohol (viscosity of 2 wt %-aqueous solution at 20 ºC: 40 cP, saponification degree: 88 mol%) was added thereto to conduct washing for 10 minutes. After standing for 10 seconds, the interface between the organic and aqueous phase emerged. In addition, rewashing was conducted with water (1,380 g) at 60 ºC. Subsequent to a 20-second-standing, the interface between the organic and aqueous phase, appeared. As for the aqueous phase, its pH and electric conductivity were 3.9 and 64 µS/cm, respectively.

### (Comparative Example 2)

Through the same operation as Working Example 3, the deactivation and the removal of the aqueous phase were conducted, and water (1,380 g) at 60 ºC was added thereto to conduct washing for 10 minutes. As a result of observation subsequent to a-1 minute-standing, both the organic and aqueous phase seemed to be not continuous but emulsified by taking in constituents of them. After an additional 120 minute-standing, the organic phase became continuous and its interface with the aqueous phase appeared. Further, rewashing was conducted under the same conditions. After standing for 60 minutes, the interface between the organic and aqueous phases emerged. As for the aqueous phase, its pH and electric conductivity were 3.8 and 62 µS/cm, respectively.

As evident from the Working and Comparative Examples described above, the separation time of the organic and aqueous phases is reduced by the method of the present invention, compared to conventional methods. The removal performance for a catalyst residue in the Comparative Examples did not substantially differ from that of the Working Examples due to the prolonged standing time. In the case of the standing time being equal to that in the Working Examples, however, no clear oil-water-interface appeared and catching of the aqueous phase containing the catalyst residue in the organic phase was caused, and as a result, a lot of catalyst residue remained in the isobutylene polymer. That is to say, it is possible by the method of the present invention to remove the catalyst from the isobutylene polymer more stably and efficiently, compared to conventional ways.

## Claims

1. A method for producing an isobutylene polymer **characterized in that** after a reaction solution containing an isobutylene polymer subsequent to polymerization process is treated with water to deactivate a catalyst and an aqueous phase is removed, water containing an amount of 0.00005 to 0.005 % by weight of a nonionic high molecular weight surfactant having a hydroxyl group is used to wash out said solution.

2. The method for producing an isobutylene polymer according to claim 1 **characterized in that** the nonionic high molecular weight surfactant having a hydroxyl group has 0.3 to 4 hydroxyl groups on average per repeating unit of molecular frame.

3. The method for producing an isobutylene polymer according to claim 1 or 2 **characterized in that** the nonionic high molecular weight surfactant having a hydroxyl group is a cellulose derivative.

4. The method for producing an isobutylene polymer according to claim 1 or 2 **characterized in that** the nonionic high molecular weight surfactant having a hydroxyl group is a polyvinyl alcohol or its derivative.

5. The method for producing an isobutylene polymer according to any of the claims 1 to 4 **characterized in that** the isobutylene polymer is a polymer which is mainly composed of isobutylene.

6. The method for producing an isobutylene polymer according to any of the claims 1 to 4 **characterized in that** the isobutylene polymer is a block copolymer comprising
(A) a polymer block mainly composed of isobutylene and
(B) a polymer block mainly composed of an aromatic vinyl monomer.

7. The method for producing an isobutylene polymer according to any of the claims 1 to 6 **characterized in that** the isobutylene polymer is a polymer which is obtainable by polymerization at a temperature range from -90 to -30 degrees C.

8. The method for producing an isobutylene polymer according to any of the claims 1 to 7 **characterized in that** the isobutylene polymer is produced by using at least one kind of compounds to be selected from (1-chloro-1-methylethyl) benzene, 1,4-bis (1-chloro-1-methylethyl) benzene, and 1, 3, 5-tris (1-chloro-1-methylethyl) benzene as a polymerization initiator.

9. The method for producing an isobutylene polymer according to any of the claims 1 to 8 **characterized in that** the isobutylene polymer is produced by using a titanium tetrachloride as a catalyst.

10. The method for producing an isobutylene polymer according to any of the claims 1 to 9 **characterized in that** the isobutylene polymer is produced by using 2-methylpyridine and/or dimethyl-acetamide as an electron donor.

11. The method for producing an isobutylene polymer according to any of the claims 1 to 10 **characterized in that** a solvent of the solution containing the isobutylene polymer is a mixed solvent including a primary and/or secondary mono-halogenated hydrocarbon having 3 to 8 carbons and an aliphatic and/or aromatic hydrocarbon.
